# EUROPÄISCHE PATENTANMELDUNG

(11) **EP 0 623 487 A1**
(43) Veröffentlichungstag der Anmeldung: **09.11.1994**
(21) Anmeldenummer: 94105911.5
(22) Anmeldetag: 15.04.1994
(51) Int. Cl.: B60P 1/64

(54) **Fahrbare Containerverladevorrichtung**

(30) Priorität: 07.05.1993 DE 4315255
(71) Anmelder: Righi, Eduard, D-94405 Landau (DE)
(72) Erfinder: Righi, Eduard, D-94405 Landau (DE)
(74) Vertreter: Zipse + Habersack

(57) **Zusammenfassung**

Die Erfindung betrifft eine fahrbare Containerverladevorrichtung (80) mit mindestens einem länglichen Fahrzeug (71), auf dessen Aufbau eine Brükkenkonstruktion (72-77) angeordnet ist, die von einer Transportstellung parallel zur Längsachse des Fahrzeugs in eine Betriebsstellung ausfahrbar ist, mit Verfahrbarkeit eines Hebezeugs in eine Richtung im wesentlichen quer zur Fahrzeuglängsachse. Die Brü kenkonstruktion ist mittels hydraulisch betätigter Teleskopstützen (72) heb- und senkbar, damit in der Transportstellung die für den Straßen- oder Schienentransport zulässige Gesamthöhe nicht überschritten wird und in der Betriebsstellung die notwendige lichte Höhe zum Greifen und Überführen der Last erreicht wird.

## Beschreibung

Die Erfindung betrifft eine fahrbare Containerverladevorrichtung.

Im nationalen und internationalen Güterverkehr werden heute überwiegend standardisierte Großcontainer eingesetzt. Die bekannten Verladevorrichtungen sind entweder als stationäre Großanlagen oder als meist schienengeführte hohe Brückenfahrzeuge ausgebildet. Die Verladung der Container erfolgt an vorbestimmten Verladeplätzen, z.B. im Güterhafen oder Güterbahnhof. Diese Anlagen sind sehr teuer und befriedigen nicht das Bedürfnis nach mobilen, schnell aufzubauenden Verladeeinrichtungen, die oft nur für kurze Zeit an einem bestimmten Ort, z.B. einer Großbaustelle benötigt werden.

Der Erfindung liegt daher die Aufgabe zugrunde, eine schnell einsetzbare mobile Containerverladevorrichtung zu schaffen.

Diese Aufgabe wird durch eine Containerverladevorrichtung gemäß Anspruch 1 gelöst. Vorteilhafte Weiterbildungen der Erfindung sind Gegenstand der Unteransprüche.

Die erfindungsgemäße Containerverladevorrichtung ist auf einem Eisenbahnanhänger oder einem Lkw, Sattelschlepper oder Lkw-Anhänger angeordnet. Auf dem Fahrzeugaufbau ist eine Brückenkonstruktion angeordnet, die von einer Transportstellung mit einer für den Straßen- und Schienentransport geeigneten Breite in eine Betriebsstellung ausfahrbar ist, mit Verfahrbarkeit des Hebezeugs in eine Richtung im wesentlichen quer zur Fahrzeuglängsachse.

Vorzugsweise ist die Brücke auf Teleskopstützen gelagert, durch die die Brücke in die Betriebsstellung angehoben werden kann. Auf diese Weise kann ein Container auch auf höhere Niveaus, z.B. auf höhere Laderampen oder Anhänger verladen werden. Im zusammengefahrenen Zustand liegt die Oberkante der Brücke unterhalb der für Fahrzeuge im öffentlichen Straßenverkehr vorgeschriebenen Maximalhöhe.

Es ist zum einen möglich, mehrere Fahrzeuge, z.B. zwei Fahrzeuge zu verwenden, auf denen jeweils eine Brücke angeordnet ist. Diese beiden Fahrzeuge werden in Arbeitsstellung vorzugsweise um 180 zueinander versetzt nebeneinander positioniert. Anschließend werden die Brücken aus der Transportstellung parallel zu den Längsachsen der Fahrzeuge in die Betriebsstellung geschwenkt. Die Brücke des einen Fahrzeugs schwenkt dabei um 90 auf eine zweite Teleskopstütze des anderen Fahrzeugs, so daß die Brücke an ihren beiden Enden auf jeweils einer Teleskopstütze abgestützt ist. Die Brücke des anderen Fahrzeugs verschwenkt ebenfalls um 90 _{°} oder um 270 _{°} auf die Teleskopstütze des ersten Fahrzeugs, so daß auf den beiden Fahrzeugen zwei Brücken parallel zueinander auf vier Teleskopstützen abgestützt sind. Die Betätigungseinrichtung für die Teleskopstützen ist vorzugsweise computergesteuert, so daß die Orientierung der Brücke den Bodengegebenheiten angepaßt, sie vorzugsweise horizontal ausgerichtet werden kann. In einer vorteilhaften Ausführungsform der Erfindung sind hierfür Lagesensoren an den beiden Brücken und an dem Rahmen zumindest eines Fahrzeugs angeordnet.

Es können auch zwei Fahrzeuge in gleicher Richtung ausgerichtet sein, wobei dann die ersten und zweiten Teleskopstützen auf den beiden Fahrzeugen vertauscht angeordnet sein müssen.

Das längs der Brücke verfahrbare Hebezeug weist vorzugsweise Zwei Greifarme auf, die aus einer Transport- oder Ruhestellung parallel zur Brücke in eine senkrechte Hebestellung schwenkbar sind. Der Container wird somit durch die vier Greifarme der beiden Brücken sicher gehalten und kann z.B. von einem Schienenfahrzeug auf einen Lkw oder umgekehrt verladen werden. Anstelle der Greifarme können Drehgreifer vorgesehen sein, die den Container von oben packen, indem sie in entsprechende Öffnungen an den vier Ecken des Containers eingreifen.

In einer Weiterbildung der Erfindung, die einen Betrieb der Verladevorrichtung auch unter engen oder schwierigen räumlichen Verhältnissen ermöglicht, hat jedes Fahrzeug zwei Fahrgestelle, die jeweils einen eigenen Antrieb und eine eigene Lenkung aufweisen. Das Fahrzeug ist daher auf einfache Weise in jede gewünschte Stellung zu fahren.

Vorzugsweise ist der Rahmen des Fahrzeugs als teleskopartig ineinander schiebbarer länglicher Rahmen ausgebildet, so daß der gegenseitige Abstand der Fahrgestelle und damit der gegenseitige Abstand der darauf angeordneten Teleskopstützen verstellbar ist. Der Abstand der Brücken voneinander kann somit durch Ineinanderfahren der Rahmenteile verstellt werden. So können sowohl kurze als auch lange Container verladen werden.

Vorzugsweise sind die Fahrgestelle der Fahrzeuge um eine horizontale Achse quer zur Fahrzeuglängsrichtung schwenkbar an dem Fahrzeugrahmen gelagert, so daß das Fahrzeug auch auf unebenem Untergrund in Betrieb genommen werden kann.

Zum Heben und Senken des Containers werden alle vier Teleskoptürme der beiden Fahrzeuge gleichzeitig betätigt. Der angehobene Container kann dabei maximal über die Länge der beiden Brücken zwischen den beiden Fahrzeugen verladen werden.

In einer alternativen Ausführungsform, die einen Einsatz der Verladevorrichtung auch unter sehr beengten Bedingungen ermöglicht, ist lediglich ein einziges Fahrzeug vorgesehen, das einen Träger parallel zu seiner Längsachse aufweist. An diesem Träger sind zwei Brücken drehbar angeordnet und in Längsrichtung des Fahrzeugs an dem Träger verfahrbar. Der Träger selbst ist an seinen beiden Enden auf Teleskopstützen an dem Rahmen des Fahrzeugs abgestützt. Die Brücken sind über Laufwagen an dem Träger verfahrbar. Der Anlenkungspunkt der Drehgelenke an den Laufwagen befindet sich beabstandet von den beiden freien Enden der Brücken, so daß sich auf einer Seite des Drehgelenks das Hebezeug befindet und auf der anderen Seite des Drehgelenks ein Gegengewicht, die beide gegengleich über Laufwagen an der Brücke verfahrbar sind. Auf diese Weise kann das Hebezeug belastet werden, ohne daß das freie Ende der Brücke an einem weiteren Fahrzeug abgestützt werden muß. Zum Gewichtsausgleich wird das Gegengewicht computergesteuert entsprechend dem Hebelarm und dem Gewicht des Containers am anderen Ende der Brücke verfahren, um so eine Kompensation der Gewichtskraft zu ermöglichen.

Vorzugsweise werden zwei Längsträger parallel zueinander angeordnet, wobei an jeweils einem Träger eine Brücke über einen Laufwagen befestigt ist. Die Brücken können dabei soweit voneinander beabstandet sein, daß dazwischen ein Container Platz findet. So kann mit dem Fahrzeug neben der Verladevorrichtung auch ein Container transportiert werden.

Durch das Verfahren der beiden Brücken längs den Trägern ist der Abstand der beiden Brücken voneinander einstellbar und es können Container beliebiger Größe verladen werden.

Im Betrieb sind seitlich an dem Rahmen Teleskopabstützungen angeordnet, die quer zur Fahrzeuglängsachse ausgefahren werden können und anschließend am Boden abstützbar sind. Auf diese Weise wird ein Kippen des Fahrzeugs während des Hebevorgangs vermieden. Diese Abstützungen sind vorzugsweise im Bereich der Längsenden des Fahrzeugs vorgesehen, um nicht den Verladevorgang zu beeinträchtigen.

In einer vorteilhaften Weiterbildung der Erfindung können die Brücken ebenfalls teleskopisch ausfahrbar und so in ihrer Länge verstellbar sein. Hierdurch läßt sich ein längerer Verladeweg realisieren, der ansonsten durch die Länge des Fahrzeugs begrenzt ist.

In einer weiteren alternativen Ausführungsform, ebenfalls unter Verwendung eines einzigen Fahrzeugs mit je einer Teleskopstütze am vorderen und am hinteren Fahrzeugende, sind auf diesen Teleskopstützen quer zur Fahrzeuglängsachse Fahrschienen für eine den Raum zwischen den beiden Teleskopstützen überspannende und quer zur Fahrzeuglängsachse verfahrbare Brücke angeordnet. An den Teleskopstützen sind Verlängerungsschienen tragende Verlängerungsstücke angeordnet, vorzugsweise angelenkt, die in der Transportstellung auf die für den Straßen- oder Schienentransport geeignete Breite eingeklappt und in der Betriebsstellung mit den Verlängerungsschienen in Ausfluchtung zu den Fahrschienen auf den Teleskopstützen ausgeklappt sind. In dieser Betriebsstellung kann dann die Brücke über den durch die gesamte Länge von Fahr- und Verlängerungsschienen bestimmten Fahrweg verfahren werden.

Vorzugsweise besteht die Brücke aus zwei Längsträgern, die in ihrem gegenseitigen Abstand veränderbar sind und an denen das Hebezeug für unterschiedliche Containergrößen längsverschieblich angeordnet ist.

Ein Gegengewicht ist vorzugsweise computergesteuert gegengleich zur Brücke längs des Fahrwegs verfahrbar zwecks Kompensation des Gewichts der Brücke und der Last.

Bei den beiden zuletzt geschilderten Ausführungsformen gestatten die Teleskopstützen am vorderen und hinteren Fahrzeugende nicht nur einen Neigungsausgleich in Fahrzeuglängsrichtung, sondern zweckmäßig auch einen seitlichen Neigungsausgleich zur Kompensation von Bodenunebenheiten oder Bodengefällen, wie sie an Bahnhöfen beispielsweise zur Entwässerung vorgesehen sind. Hierzu können die Teleskopstützen seitlich nebeneinander getrennt steuerbare Hydraulikzylinder aufweisen.

Die Erfindung wird nachfolgend anhand der schematischen Zeichnung beispielsweise beschrieben. In dieser zeigen:
Fig. 1 eine Seitenansicht auf ein Fahrzeug in einer ersten aus zwei Fahrzeugen bestehenden Ausführungsform der erfindungsgemäßen Containerverladevorrichtung in der Transportstellung;
Fig. 2 eine Frontansicht auf die beiden Fahrzeuge in Betriebsstellung beim Heben eines Containers;
Fig. 3 eine Seitenansicht 111 aus Fig. 2, ebenfalls in Betriebsstellung;
Fig. 4 eine weitere Ausführungsform einer aus einem Fahrzeug bestehenden Containerverladevorrichtung in Transportstellung;
Fig. 5 eine Frontansicht der Containerverladevorrichtung aus Fig. 4 in Betriebsstellung beim Heben eines Containers;
Fig. 6 die Seitenansicht VI aus Fig. 5, ebenfalls in Betriebsstellung;
Fig. 7 die Draufsicht einer weiteren Ausführungsform einer aus einem Fahrzeug bestehenden Containerverladevorrichtung in einer Zwischenstellung zwischen Transport- und Betriebsstellung; und
Fig. 8 die Draufsicht der Containerverladevorrichtung von Fig. 7 in der Betriebsstellung.

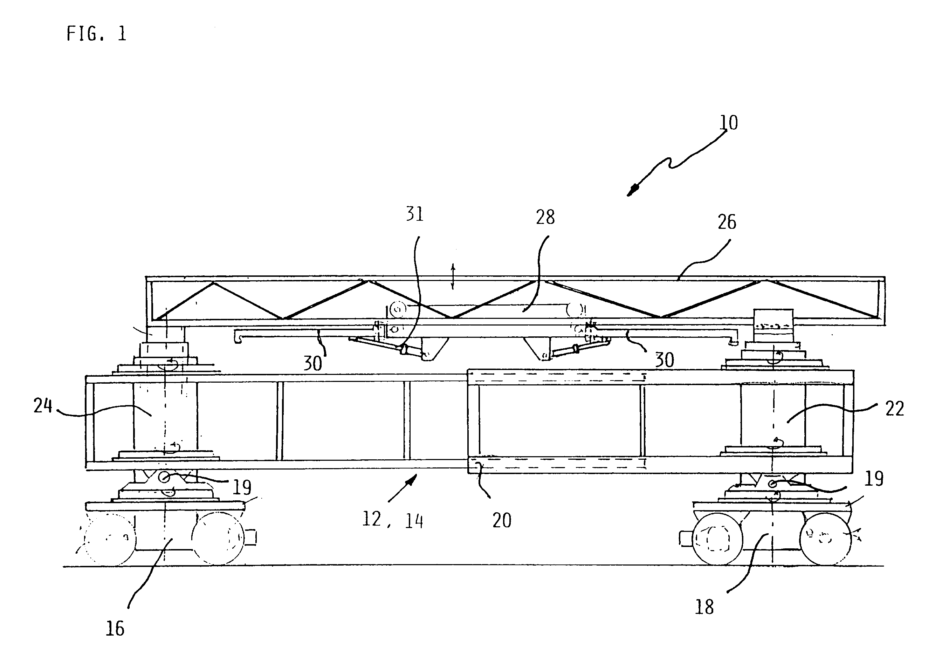

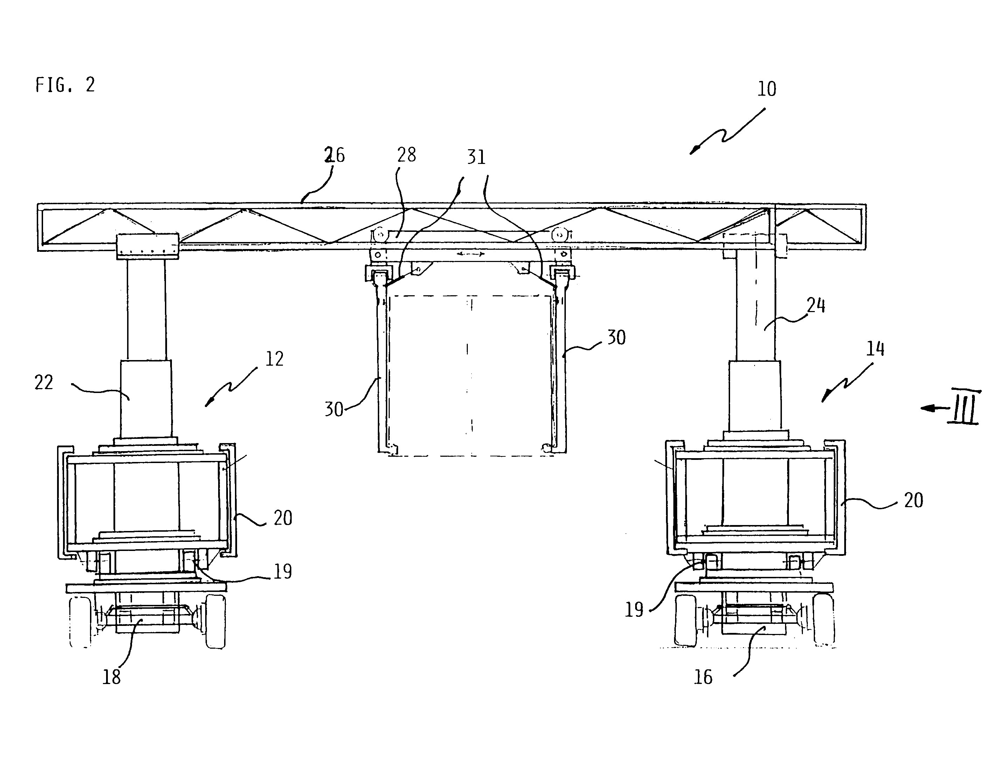

Die in den Fig. 1 bis 3 beschriebene Containerverladevorrichtung 10 besteht aus zwei Fahrzeugen 12, 14 (Fig. 2), die jeweils auf zwei Fahrgestellen 16, 18 gelagert sind. Die beiden Fahrgestelle 16, 18 eines Fahrzeugs sind über einen teleskopartig ineinander verschiebbaren Rahmen 20 bzw. Aufbau miteinander verbunden, so daß der gegenseitige Abstand der Fahrgestelle 16, 18 einstellbar ist. Auf jedem der Fahrgestelle 16, 18 ist eine erste und zweite Teleskopstütze 22, 24 angeordnet. Auf der ersten Teleskopstütze 22 ist eine Brücke 26 drehbar gelagert. Sie kann motorisch von der in Fig. 1 abgebildeten Transportstellung in die in Fig. 2 abgebildete Betriebsstellung ausgeschwenkt werden.

An der Brücke 26 ist in deren Längsrichtung ein erster Laufwagen 28 verfahrbar angeordnet. An diesem Laufwagen 28 befindet sich das Hebezeug in Form zweier hydraulisch betätigbarer Greifarme 30. Während das eine Ende der Brücke 26 mit dem oberen Ende der ersten Teleskopstütze 22 fest verbunden ist, ist das andere freie Ende auf der zweiten Teleskopstütze 24 des jeweils anderen Fahrzeugs abgestützt.

Die beiden Fahrzeuge 12, 14 werden je nach Bedarf zu einem Einsatzort gefahren. Am Einsatzort werden sie parallel zueinander in einem derartigen Abstand angeordnet (Fig. 2), daß das freie Ende der in Richtung auf das andere Fahrzeug ausgeschwenkten Brücke auf der zweiten Teleskopstütze des anderen Fahrzeugs zu liegen kommt. Die freien Enden der Brücke jedes Fahrzeugs sind somit wechselseitig am jeweils anderen Fahrzeug abgestützt. Im ausgefahrenen und einsatzfähigen Zustand findet diese Anordnung selbst unter stromführenden Leitungen der Deutschen Bundesbahn Platz. Zum Betätigen der Verladevorrichtung werden die vier Teleskopstützen 22, 24 der beiden Fahrzeuge 12, 14 gleichzeitig betätigt, wobei durch eine Computersteuerung eine horizontale Lage des Containers sichergestellt wird. Zum Greifen des Containers werden die Greifarme 30 mittels der hydraulischen Stelltriebe 31 in eine senkrechte Hebestellung verschwenkt.

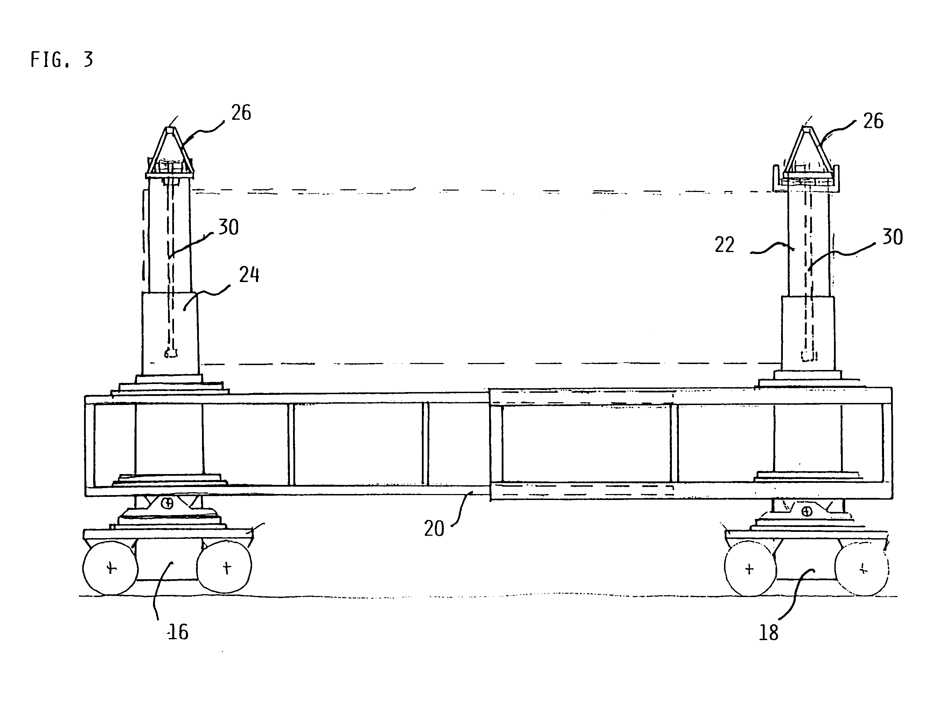

Durch Ineinanderfahren der teleskopisch verstellbaren Rahmen 20 (Fig. 3) kann der gegenseitige Abstand der beiden Brücken 26 eingestellt werden, so daß längere wie auch kürzere Container verladen werden können.

Durch die schwenkbare Anlenkung 19 der Fahrgestelle 16, 18 an dem Rahmen 20 und die Lenk- und Antreibbarkeit jedes einzelnen Fahrgestells 16, 18 ist eine optimale Mobilität der Vorrichtung auch unter beengten und schwierigen, z.B. unebenen Bodenverhältnissen gegeben.

In der in den Fig. 2 und 3 dargestellten Betriebsstellung können selbstverständlich die auf den zweiten Teleskopstützen aufliegenden freien Enden der Brücken 26 an diesen Stützen befestigt oder mittels rinnen- oder nutenförmiger Auflager in Fahrzeuglängsrichtung festgelegt werden. Es ist so auch möglich, die gesamte Vorrichtung in Längsrichtung und sogar um Kurven zu verfahren. Auf diese Weise kann nicht nur eine Querverladung, sondern auch eine Verladung in Fahrzeuglängsrichtung realisiert werden.

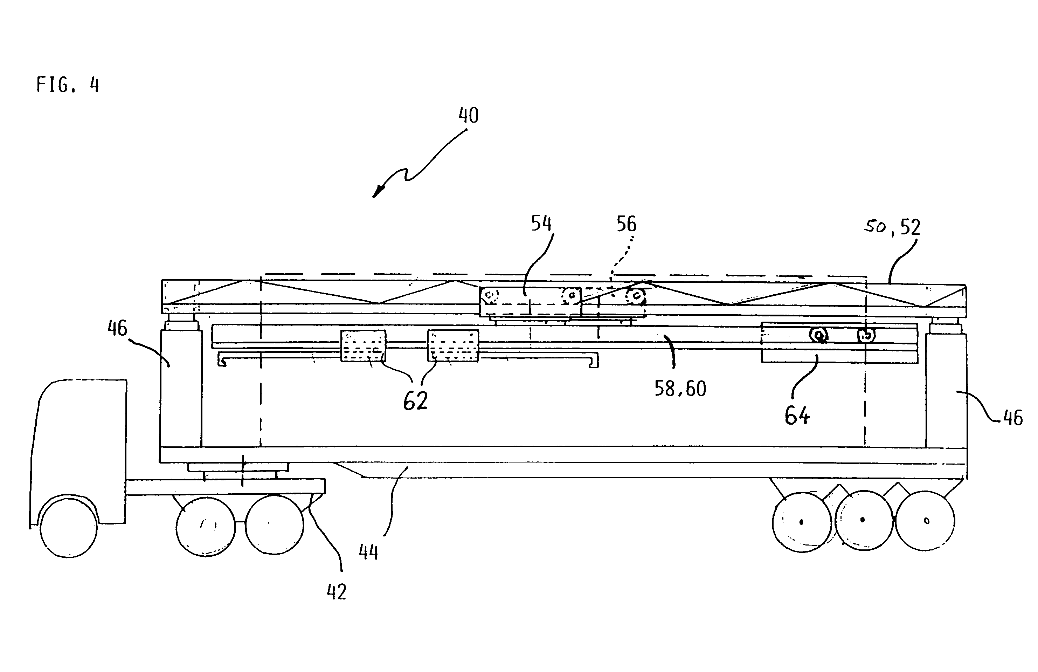

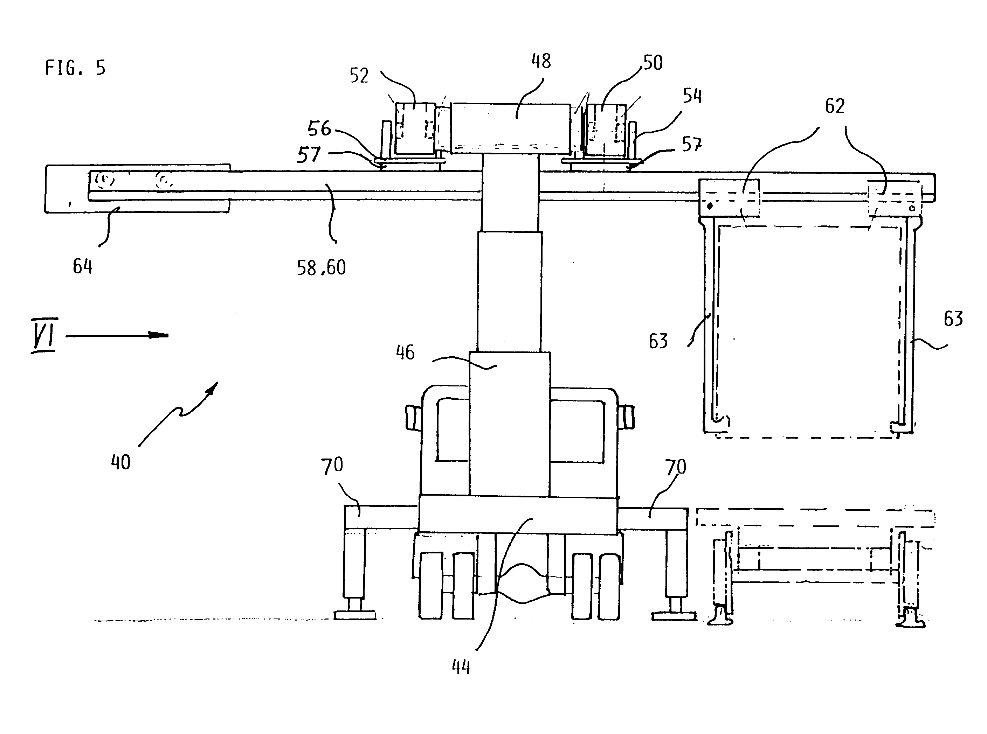

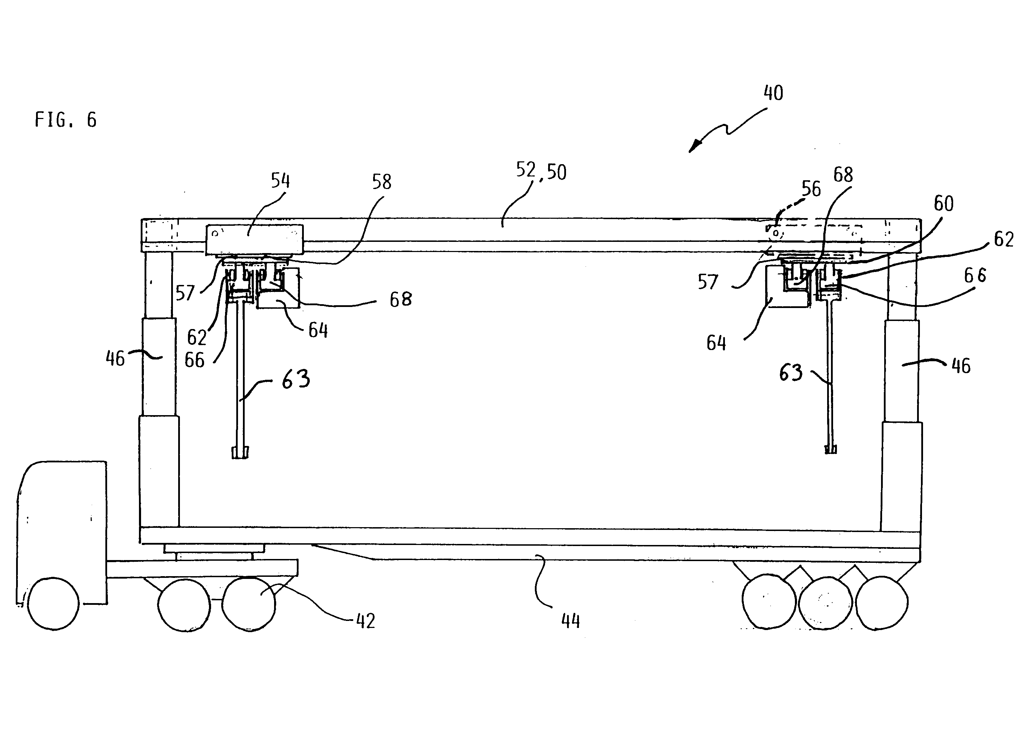

Die Fig. 4 bis 6 zeigen eine zweite Ausführungsform einer Containerverladevorrichtung 40, die auf einem einzigen Fahrzeug 42 angeordnet ist. Dieses Fahrzeug kann sowohl zum Verladen als auch zum Transport eines Containers dienen. Das Fahrzeug 42 ist als Sattelschlepper ausgebildet, auf dessen länglichem Aufleger 44 an dessen Längsenden zwei Teleskopstützen 46 angeordnet sind. An den oberen Enden der Teleskopstützen 46 ist jeweils ein horizontales T-Stück 48 (Fig. 5) angeordnet, an dessen freien Enden jeweils ein Längsträger 50, 52 parallel zur Fahrzeuglängsrichtung angeordnet ist. An jedem dieser beiden Längsträger 50, 52 ist jeweils ein Laufwagen 54, 56 in dessen Längsrichtung verfahrbar angeordnet. Die Laufwagen 54, 56 weisen an ihrer Unterseite ein Drehgelenk 57 auf, an dem jeweils eine Brücke 58, 60 drehbar gehalten ist. Das Drehgelenk 57 ist etwa in der Mitte der Brücke 58,60 angelenkt. Die Brücke ist somit durch das Drehgelenk 57 in zwei Arme unterteilt, an denen das Hebezeug 62 und ein Gegengewicht 64 gegenläufig verfahrbar sind. Das Gegengewicht 64 wird computergesteuert entsprechend dem Hebelarm und dem Gewicht des angehobenen Containers an dem anderen Arm verfahren. Durch das Vorsehen von zwei zueinander parallelen Schienen 66, 68 an der Unterseite der Brücke 58, 60 können das Hebezeug 62 und das Gegengewicht 64 gegenläufig aneinander vorbeibewegt werden, ohne sich gegenseitig zu behindern. Das Hebezeug 62 enthält zwei an der Brücke 58, 60 gegeneinander verschwenkbare Greifarme 63, die jeweils durch einen Laufwagen an der Brücke 58, 60 verfahrbar sind.

Der gegenseitige Abstand der Brücken 58, 60 kann über das Verfahren der beiden Laufwagen 54, 56 eingestellt werden, so daß Container verschiedener Länge verladen werden können.

Dadurch, daß das Hebezeug 62, 63 an einer ersten Schiene 66 der Brücke 58, 60 und das Gegengewicht 64 an einer zweiten Schiene 68 der Brücke 58, 60 angeordnet sind, kann die volle Länge der Brücke als Verladeweg ausgenutzt werden, weil sich das Gegengewicht und das Hebezeug bzw. der im Hebezeug gehaltene Container beim Überschneiden nicht berühren. Die Gegengewichte 64 sind derart ausgebildet, daß sie in einer Endposition (Fig. 5) über das freie Ende der Brükke 58, 60 hinausragen. Für die automatische Steuerung des Gegengewichts in Abhängigkeit von der Lage und dem Gewicht des Hebezugs mit Container kann neben Kraftmeßdosen auch ein elektronischer Lagesensor verwendet werden. Ist die Absenkung eines Containers unter das Fahrstraßenniveau vorgesehen, können in dem Hebezeug 62 neben den Greifarmen 63 auch Seilwinden vorgesehen werden, durch die der Container absenkbar ist.

Soll nach beendigter Verladetätigkeit ein Container mit dem Fahrzeug transportiert werden, so wird der Container mittig auf dem Rahmen 44 des Fahrzeugs abgestellt und die Teleskopstützen 46 werden derart abgesenkt, daß die beiden Längsträger 50, 52 an den Außenseiten des Containers zu liegen kommen. Hierdurch werden zum einen der Container gegen seitliches Verrutschen gesichert und zum anderen die zulässige Fahrzeughöhe nicht überschritten. Das Fahrzeug 42 weist seitlich ausfahrbare Teleskopabstützungen 70 auf, durch die die Lage des Fahrzeugs in bekannter Weise stabilisiert werden kann.

Das Hebezeug kann durch hinlänglich bekannte Anordnungen modifiziert werden. Die Greifarme können z.B., wie es in Fig. 5 dargestellt ist, sowohl gegeneinander verfahrbar als auch verschwenkbar sein, und es können Winden oder Teleskopmechanismen zum Anheben und Absenken des Containers verwendet werden.

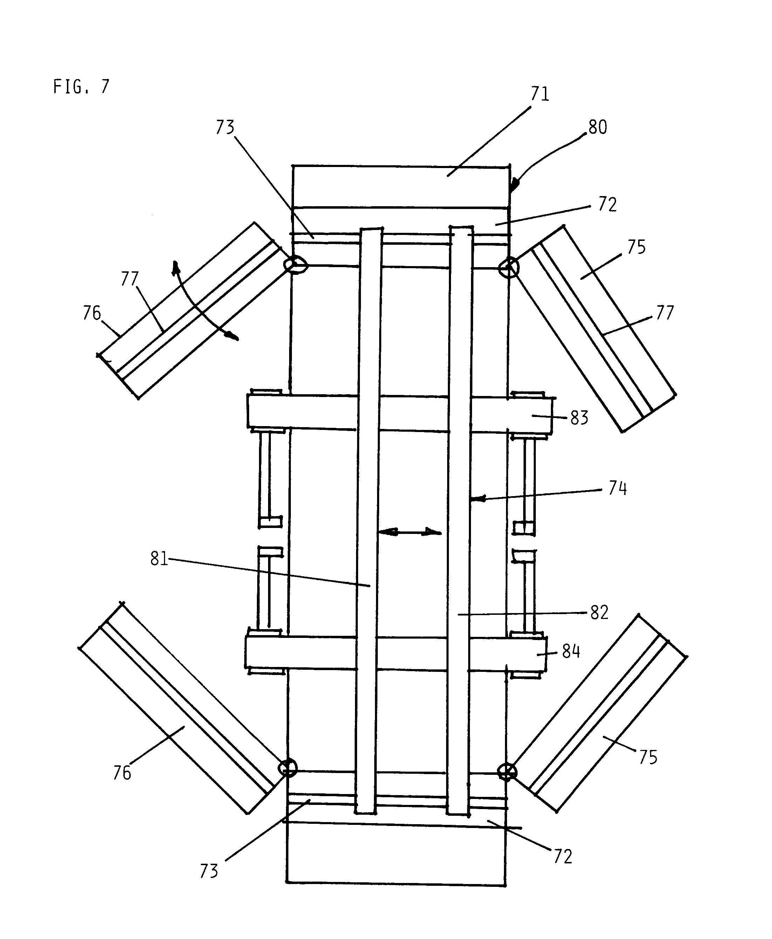

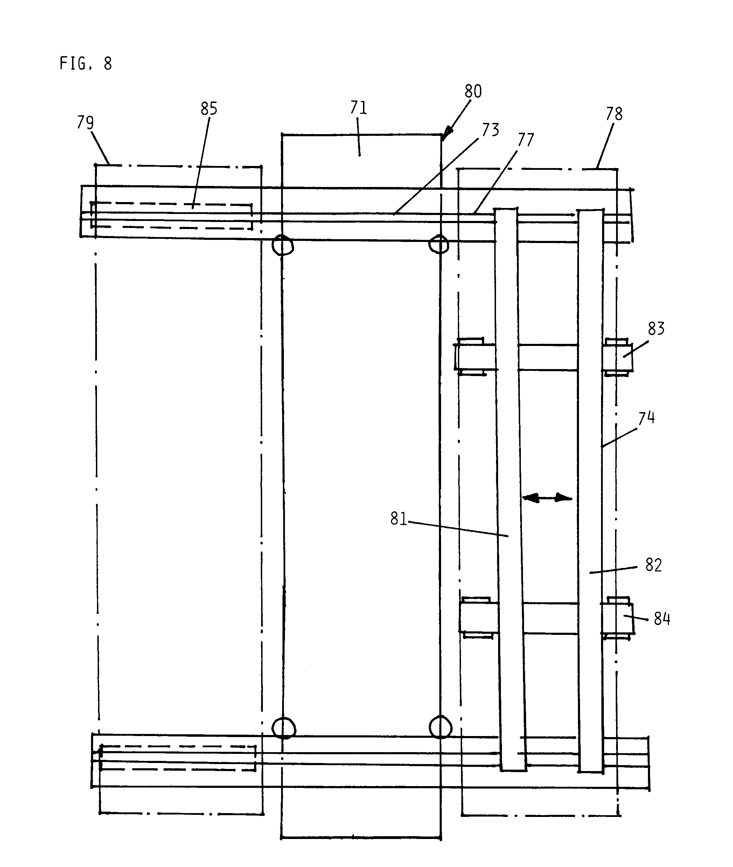

Die Fig. 7 und 8 zeigen eine zu den Fig. 4 bis 6 alternative Ausführungsform einer Containerverladevorrichtung 80 auf einem einzigen (schematisch nur im Umriß dargestellten) Fahrzeug 71 mit je einer Teleskopstütze 72 am vorderen und am hinteren Fahrzeugende. Die Teleskopstützen 72 erstrecken sich beispielsweise über die gesamte Fahrzeugbreite und sie tragen auf ihrer Oberseite quer zur Fahrzeuglängsachse eine Fahrschiene 73, auf der eine den Raum zwischen den Teleskopstützen 72 überspannende Brücke 74 quer verfahrbar ist.

An die Teleskopstützen 72 sind beidseitig um eine vertikale Achse Verlängerungsstücke 75, 76 angelenkt, die höhengleich mit den Fahrschienen 73 Verlängerungsschienen 77 tragen. In der Transportstellung sind die Verlängerungsstücke 75, 76 innerhalb die für den Straßen- bzw. Schienentransport zulässige Breite eingefahren, und in der ausgeklappten Betriebsstellung (Fig. 8) liegen die Verlängerungsschienen 77 in Ausfluchtung mit den Fahrschienen 73. In dieser Betriebsstellung ist somit die Brücke 74 über den gesamten aus Fahr-und Verlängerungsschienen 73 und 77 gebildeten Fahrweg verfahrbar, um einen Container beispielsweise von einem rechts des Fahrzeugs 71 abgestellten Eisenbahnwaggon 78 abzunehmen und auf einen links des Fahrzeugs 71 vorgefahrenen Lkw 79 zu überführen.

Die Brücke 74 setzt sich, wie dargestellt, aus zwei Längsträgern 81, 82 zusammen, die in einem festen Abstand voneinander, zweckmäßig entsprechend einer Containerbreite, angeordnet sind. Längs den Längsträgern 81, 82 sind an Rollwagen oder Schlitten zwei Querträger 83, 84 verschiebbar, an denen ihrerseits Greifarme, Drehgreifer oder dergleichen längsverschieblich angeordnet sind. Aufgrund dieser Längs- und Querverschiebbarkeit der Greifarme kann jede Last wie Container, Wechselbrücke usw. gegriffen werden.

Anstelle von Längsträgern mit festem Abstand kann die Brücke 74 auch aus zwei Längsträgern mit veränderbarem Abstand gebildet sein. Die Greifarme können dann unmittelbar über Schlitten, Rollwagen oder dergleichen an den Längsträgern aufgehängt sein.

Zur Kompensation des auskragenden Gewichts der Brücke 74 und der angehängten Last ist wie bei der Ausführungsform der Fig. 4 bis 6 ein Gegengewicht 85 erforderlich, das, zweckmäßig computergesteuert, gegengleich zur Brücke 74 längs des Fahrwegs 73, 77 geführt ist. Eine Führungsschiene für das Gegengewicht 85 kann platzsparend z.B. unterhalb der Fahrschiene 73 und der Verlängerungsschienen 77 durch die Teleskopstütze 72 und durch die Verlängerungsstücke 75, 76 verlegt sein.

## Patentansprüche

1. Fahrbare Lasten-, insbesondere Containerverladevorrichtung (10,40,80) mit einer auf einem Fahrzeugaufbau (20, 42) montierten Brückenkonstruktion (26; 58,60; 72-77) mit einem Hebezeug (28,30,31; 62,63) zum Greifen der Last bzw. des Containers,
dadurch gekennzeichnet,
daß die Brückenkonstruktion (26; 58,60; 72-77) von einer Transportstellung mit einer für den Straßen- oder Schienentransport geeigneten Breite und Höhe in eine Betriebsstellung ausfahrbar ist, mit Verfahrbarkeit des Hebezeugs in eine Richtung im wesentlichen quer zur Fahrzeuglängsachse und mit einer zum Greifen der Lasten geeigneten lichten Höhe über dem Boden.

2. Vorrichtung nach Anspruch 1,
dadurch gekennzeichnet,
daß die Brückenkonstruktion (26; 58,60; 72-77) in Richtung der Fahrzeuglängsachse und/oder quer zur Fahrzeuglängsachse mit einem Neigungsausgleich zur Kompensierung von Bodenunebenheiten versehen ist.

3. Vorrichtung nach Anspruch 2,
dadurch gekennzeichnet,
daß die Brückenkonstruktion (26; 58,60; 72-77) mittels hydraulisch betätigter Teleskopstützen (22,24; 46; 72) heb- und senkbar sowie in der Seiten- und/oder Längsneigung einstellbar ist.

4. Vorrichtung nach einem der Ansprüche 1 bis 3,
dadurch gekennzeichnet,
daß an der Brückenkonstruktion (26; 58,60; 72-77) gegengleich zum Hebezeug (72,73) ein Gegengewicht (64,85) verfahrbar ist.

5. Vorrichtung nach einem der vorhergehenden Ansprüche,
dadurch gekennzeichnet,
daß sie zumindest zwei Fahrgestelle (16,18) besitzt und jedes Fahrgestell einen eigenen Antrieb und eine eigene Lenkung aufweist.

6. Vorrichtung nach einem der vorhergehenden Ansprüche,
dadurch gekennzeichnet,
daß die Brückenkonstruktion (26; 58,60; 72-77) auf einen Lkw-Sattelschlepper oder Lkw-Anhänger (Tieflader) montiert ist.

7. Vorrichtung nach einem der vorhergehenden Ansprüche,
dadurch gekennzeichnet,
daß das Hebezeug (28,30,31; 62,63) mit ein-und ausschwenkbaren Greifarmen (30,63) zum Unterfassen der Last, des Containers oder einer Wechselbrücke ausgerüstet ist, oder Drehgreifer zum von oben Greifen von Containern aufweist.

8. Vorrichtung nach einem der vorhergehenden Ansprüche,
dadurch gekennzeichnet,
daß sie zwei Fahrzeuge (12,14) umfaßt, jeweils mit einer über eine erste Teleskopstütze (22) höhenverstellbar und drehbar gelagerten Brükke (26) und mit einer zweiten höhenverstellbaren Teleskopstütze (24) zur Abstützung des freien Endes der Brücke (26)
- in der Transportstellung desselben Fahrzeugs und
- in der Betriebsstellung des anderen Fahrzeugs.

9. Vorrichtung nach Anspruch 8,
dadurch gekennzeichnet,
daß der Aufbau (20) der Fahrzeuge (12,14) durch eine teleskopisch ein- und ausfahrbare Rahmenkonstruktion gebildet ist.

10. Vorrichtung nach einem der Ansprüche 1 bis 7,
dadurch gekennzeichnet,
daß sie ein einziges Fahrzeug (42) umfaßt mit zumindest einem in der Fahrzeuglängsachse verlaufenden Längsträger (50,52), der an seinen Enden über höhenverstellbare Teleskopstützen (46) am Fahrzeugrahmen (44) abgestützt ist, daß längs jedem Längsträger eine Brücke (58,60) verfahr- und drehbar angeordnet ist, die in der Transportstellung im wesentlichen parallel zum Längsträger (50,52) und in der Betriebsstellung im wesentlichen quer zum Längsträger liegt, und an welcher Brücke das Hebezeug (62,63) und das Gegengewicht (64) verfahrbar angeordnet sind.

11. Vorrichtung nach Anspruch 10,
dadurch gekennzeichnet,
daß im Abstand einer Containerbreite zwei parallel zueinander verlaufende Längsträger (50,52) vorgesehen sind, und daß auf dem Fahrzeugrahmen (44) zwischen den beiden Längsträgern eine Abstellfläche für die Last bzw. den Container vorgesehen ist.

12. Vorrichtung nach Anspruch 11,
dadurch gekennzeichnet,
daß die Brücke (58,60) in der Betriebsstellung in einen Laufwagen am anderen Längsträger (50,52) einhängbar ist.

13. Vorrichtung nach einem der Ansprüche 10 bis 12,
dadurch gekennzeichnet,
daß an jeder Brücke (58,60) separate Schienen (66,68) für das Hebezeug (62,63) und für das Gegengewicht (64) vorgesehen sind.

14. Vorrichtung nach einem der Ansprüche 1 bis 7,
dadurch gekennzeichnet,
daß sie ein einziges Fahrzeug (80) umfaßt, mit je einer Teleskopstütze (72) an seinem vorderen und an seinem hinteren Ende, auf welchen Teleskopstützen quer zur Fahrzeuglängsachse eine Fahrschiene (73) für eine quer verfahrbare Brücke (74) angeordnet ist, und daß die Teleskopstützen (72) Verlängerungsstücke (75,76) mit Verlängerungsschienen (77) tragen, die in der Transportstellung innerhalb die für den Straßen- bzw. Schienentransport zulässige Breite eingefahren sind und in der Betriebsstellung in Ausfluchtung mit den Fahrschienen auf den Teleskopstützen sind.

15. Vorrichtung nach Anspruch 14,
dadurch gekennzeichnet,
daß die Verlängerungsstücke (75,76) mit den Verlängerungsschienen (77) an die Teleskopstützen (72) angelenkt sind und zwischen der Transport- und der Betriebsstellung ein- bzw. ausklappbar sind.

16. Vorrichtung nach Anspruch 14 oder 15, dadurch gekennzeichnet,
daß die Teleskopstützen (72) und die Verlängerungsstücke (75,76) eine Schiene für das Gegengewicht (85) aufweisen, längs derer das Gegengewicht, vorteilhaft computergesteuert, gegengleich zur Brücke (74) verfahrbar ist.

17. Vorrichtung nach einem der Ansprüche 14 bis 16,
dadurch gekennzeichnet,
daß die Brücke (74) zwei Längsträger (81,82) besitzt, die in ihrem gegenseitigen Abstand veränderbar sind, und an denen das Hebezeug längsverschieblich angeordnet ist.

18. Vorrichtung nach einem der Ansprüche 14 bis 17,
dadurch gekennzeichnet,
daß die Brücke (74) zwei Längsträger (81,82) besitzt, die in festem Abstand zueinander entsprechend einer Containerbreite angeordnet sind, an welchen Längsträgern Querträger (83,84) längsverschieblich angeordnet sind, an welchen Querträgern ihrerseits das Hebezeug verschieblich aufgehängt ist.
